# EUROPEAN PATENT SPECIFICATION

(11) **EP 3 734 704 B1**
(45) Date of publication and mention of the grant of the patent: **30.03.2022**
(21) Application number: 20171833.5
(22) Date of filing: 28.04.2020
(51) Int. Cl.: H01M 50/411, H01M 50/46, H01M 4/13, H01M 4/505, H01M 4/525, H01M 4/58, H01M 4/62, H01M 10/42, H01M 4/36

(54) **RECHARGEABLE LITHIUM BATTERY**
WIEDERAUFLADBARE LITHIUMBATTERIE
BATTERIE RECHARGEABLE AU LITHIUM

(30) Priority: 03.05.2019 KR 20190052572
(43) Date of publication of application: 04.11.2020
(73) Proprietor: Samsung SDI Co., Ltd., Yongin-si, Gyeonggi-do 17084 (KR)
(72) Inventor: Ha, Jaehwan, Yongin-si, Gyeonggi-do 17084 (KR); Kim, Kijun, Yongin-si, Gyeonggi-do 17084 (KR); Yoo, Heeeun, Yongin-si, Gyeonggi-do 17084 (KR); Yoon, Yeonhee, Yongin-si, Gyeonggi-do 17084 (KR); Lee, Kyuseo, Yongin-si, Gyeonggi-do 17084 (KR); Lee, Dongmyung, Yongin-si, Gyeonggi-do 17084 (KR)
(74) Representative: Gulde & Partner

(56) References cited:
- EP-A2- 1 079 455
- US-A1- 2014 272 489
- US-A1- 2014 322 600

## Description

### BACKGROUND OF THE INVENTION

### (a) Field of the Invention

This disclosure relates to a rechargeable lithium battery.

### (b) Description of the Related Art

A portable information device such as a cell phone, a laptop, smart phone, and the like or an electric vehicle has used a rechargeable lithium battery having high energy density and easy portability as a driving power source. In addition, research on use of a rechargeable lithium battery as a power source for a hybrid or electric vehicle or a power storage by using high energy density characteristics has recently been actively made.

One of the main research tasks of such a rechargeable lithium battery is to improve the safety of the rechargeable battery. For example, if the rechargeable lithium battery is exothermic due to internal short circuit, overcharge and overdischarge, and the like, and an electrolyte decomposition reaction and thermal runaway phenomenon occur, an internal pressure inside the battery may rise rapidly to cause battery explosion. Among these, when the internal short circuit of the rechargeable lithium battery occurs, there is a high risk of explosion because the high electrical energy stored in each electrode is conducted in the shorted positive electrode and negative electrode.

In addition to the damage of the rechargeable lithium battery, the explosion may cause fatal damages to the user. Therefore, it is urgent to develop a technique capable of improving safety of the rechargeable lithium battery. Examples for rechargeable lithium batteries with shutdown approach may be found in US 2014/272489 A1, EP 1 079 455 A2 or US 2014/322600 A1.

On the other hand, LFP is used as a low heat-generating safety material, but an average potential thereof is relatively low, accompanied by a decrease in capacity when discharging. Therefore, there is a need for technology development to improve these problems.

### SUMMARY OF THE INVENTION

A rechargeable lithium battery having high capacity, high voltage, and safety is provided.

An embodiment provides a rechargeable lithium battery including a positive electrode including a positive current collector and a positive active material layer disposed on the positive current collector; and a negative electrode including a negative current collector, a negative active material layer disposed on the negative current collector, and a negative electrode functional layer disposed on the negative active material layer, the positive active material layer includes a first positive active material including lithium and at least one of a composite oxide of a metal selected from cobalt, manganese, and nickel, and a second positive active material including a compound represented by Chemical Formula 1, and the negative electrode functional layer includes flake-shaped polyethylene particles, wherein a ratio of the long axis length relative to the short axis length of the flake-shaped polyethylene particles is 1.1 to 4.5.

[Chemical Formula 1] LiₐFe₁₋ₓMₓPO₄

In Chemical Formula 1, 0.90 ≤ a ≤ 1.8, 0.5 ≤ x ≤ 1.0, and M is at least one of Mn, Co, and Ni, according to the independent claim 1.

It is possible to implement a rechargeable lithium battery having high stability while maintaining high capacity under a high voltage.

### BRIEF DESCRIPTION OF THE DRAWINGS

FIG. 1 schematically shows a structure of a rechargeable lithium battery according to an embodiment of the present disclosure.
FIG. 2 is a graph showing measurement results of voltage-capacity characteristics of the rechargeable lithium battery cells according to Example 1, Example 4, and Comparative Example 2.
FIG. 3 is a SEM photograph of polyethylene particles of a negative electrode functional layer according to an embodiment.
FIG. 4 is a SEM photograph of a negative electrode composition according to an embodiment.

| Name of unit | Symbol | Conversion factor | SI or metric unit |
|---|---|---|---|
| density | g/cc | 1 | g/cm³ |

### DETAILED DESCRIPTION OF THE EMBODIMENTS

Hereinafter, referring to the drawings, embodiments of the present invention are described in detail. In the following description of the present disclosure, the well-known functions or constructions will not be described in order to clarify the present disclosure.

In order to clearly illustrate the present disclosure, the description and relationships are omitted, and throughout the disclosure, the same or similar configuration elements are designated by the same reference numerals. Also, since the size and thickness of each configuration shown in the drawing are arbitrarily shown for better understanding and ease of description, the present disclosure is not necessarily limited thereto.

A rechargeable lithium battery may be classified into a lithium ion battery, a lithium ion polymer battery, and a lithium polymer battery depending on kinds of a separator and an electrolyte. It also may be classified to be cylindrical, prismatic, coin-type, pouch-type, and the like depending on shape. In addition, it may be bulk type and thin film type depending on sizes. Structures and manufacturing methods for lithium ion batteries pertaining to this disclosure are well known in the art.

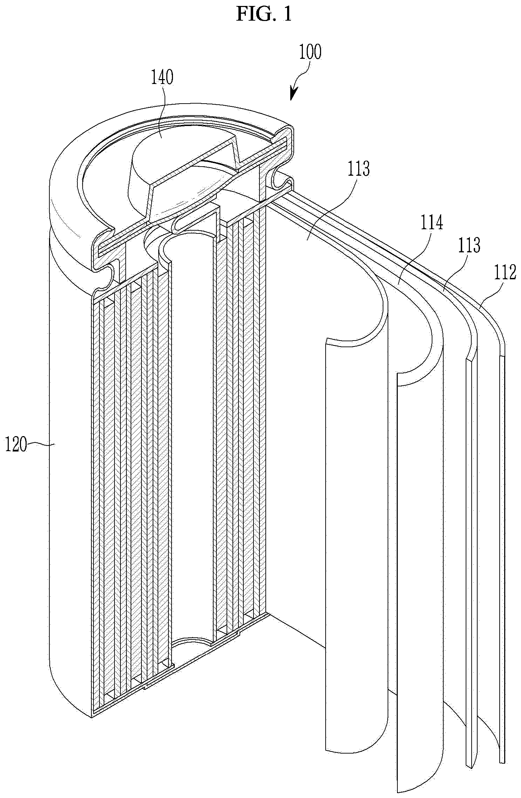

Hereinafter, as an example of a rechargeable lithium battery, a cylindrical rechargeable lithium battery is for example described. FIG. 1 schematically shows a structure of a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 disposed between the positive electrode 114 and the negative electrode 112, and an electrolyte (not shown) impregnating the positive electrode 114, negative electrode 112, and separator 113, a battery case 120 containing the battery cell, and a sealing member 140 sealing the battery case 120.

Hereinafter, a detailed configuration of the rechargeable lithium battery 100 according to an embodiment of the present invention is described.

A rechargeable lithium battery according to an embodiment includes a positive electrode and a negative electrode, the positive electrode includes a positive current collector and a positive active material layer disposed on the positive current collector, and a negative electrode includes a negative current collector, a negative active material layer disposed on the negative current collector, and a negative electrode functional layer disposed on the negative active material layer.

The positive active material layer includes a first positive active material including lithium and at least one of a composite oxide of a metal selected from cobalt, manganese, and nickel, and a second positive active material including a compound represented by Chemical Formula 1.

[Chemical Formula 1] LiₐMₓ₁Fe₁₋ₓ₁PO₄

In Chemical Formula 1, 0.90 ≤ a ≤ 1.8, 0.5 ≤ x1 ≤ 1.0, and M is at least one of Mn, Co, and Ni.

In addition, the negative electrode functional layer includes flake-shaped polyethylene particles.

The second positive active material is a high power material having a high average potential and may realize high capacity at a voltage of 3 V or higher.

In other words, when the second positive active material is used together with the first positive active material, high capacity may be realized even at a high voltage, and thus a high-capacity rechargeable battery may be realized.

For example, based on a discharge voltage of 3.4 V, while a rechargeable battery including LFP as a positive active material exhibits sharp capacity degradation, the rechargeable battery including the second positive active material represented by Chemical Formula 1 may maintain high capacity. Specifically, based on 3.4 V, this rechargeable battery may exhibit 2.2% improved capacity compared with the rechargeable battery including LFP.

In addition, since the negative electrode having the negative electrode functional layer including flake-shaped polyethylene particles is also included, a shut-down function thus may be further effectively realized and thereby prevent an additional electrical/chemical reaction, and accordingly, a rechargeable battery having safety may be realized.

The second positive active material represented by Chemical Formula 1 may have an average potential of 3.5 V to 4.5 V. When the average potential is within the range, a rechargeable battery workable at a high voltage may be realized, and even though a discharge voltage is increased, the capacity degradation may be improved, and accordingly, a high energy density battery securing safety may be realized.

In an embodiment, the first positive active material and the second positive active material may be included in a weight ratio of 97 : 3 to 80 :20, for example 95 : 5 to 85 :15.

An amount of the first positive active material may be 70 wt% to 99 wt%, more specifically, 85 wt% to 99 wt%, 87 wt% to 95 wt%, or 90 wt% to 93 wt% based on a total weight of the positive active material layer.

An amount of the second positive active material may be 1 wt% to 15 wt%, more specifically, 2 wt% to 15 wt%, 2 wt% to 12 wt%, or 2 wt% to 10 wt% based on a total weight of the positive active material layer.

When the amounts of the first positive active material and the second positive active material satisfies the above range, safety may be improved without lowering capacity.

The positive active material layer may further include a positive electrode functional layer disposed on the positive active material layer.

For example, the first positive active material may be included in the positive active material layer, and the second positive active material may be included the positive electrode functional layer.

The first positive active material may specifically include at least one of LiCoO₂ and Liₓ₁M¹_{1-y1-z1}M²_{y1}M³_{Z1}O₂ with 0.9≤x1≤1.8, 0≤y1≤1, 0≤z1≤1, 0≤y1+z1≤1, and M¹, M², and M³ are metals independently selected from Ni, Co, Mn, Al, Sr, Mg, and La).

For example, the first positive active material may include LiCoO₂.

For example, M¹ may be Ni, and M² and M³ may independently be a metal selected from Co, Mn, Al, Sr, Mg, and La.

More specifically, M¹ may be Ni, M² may be Co, and M³ may be Mn or Al.

In an embodiment, the second positive active material may be selected from LiMn_{0.7}Fe_{0.3}PO₄, LiMnPO₄, and a combination thereof.

The positive active material layer may optionally further include a positive electrode conductive material and a positive electrode binder.

The amounts of the positive electrode conductive material and the positive electrode binder may be 1 wt% to 5 wt% based on a total weight of the positive active material layer, respectively.

The positive electrode conductive material is used to impart conductivity to the positive electrode, and may be used as long as it is an electron conductive material without causing chemical change in the battery. Examples of the conductive material may include a carbon-based material such as natural graphite, artificial graphite, carbon black, acetylene black, ketjen black, and a carbon fiber; a metal-based material of a metal powder or a metal fiber including copper, nickel, aluminum, and silver; a conductive polymer such as a polyphenylene derivative; or a mixture thereof.

The positive electrode binder adheres positively to the positive active material particles, and also serves to adhere the positive active materials to the current collector well. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, and nylon.

The positive current collector may include aluminum or nickel.

The electrolyte includes a non-aqueous organic solvent and a lithium salt.

The non-aqueous organic solvent serves as a medium for transporting ions taking part in the electrochemical reaction of a battery.

The non-aqueous organic solvent may include a carbonate-based, ester-based, ether-based, ketone-based, alcohol-based, or aprotic solvent. The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like and the ester-based solvent may include methyl acetate, ethyl acetate, n-propyl acetate, dimethylacetate, methylpropionate, ethylpropionate, γ-butyrolactone, decanolide, valerolactone, mevalonolactone, caprolactone, and the like. The ether-based solvent may include dibutyl ether, tetraglyme, diglyme, dimethoxyethane, 2-methyltetrahydrofuran, tetrahydrofuran, and the like and the ketone-based solvent may include cyclohexanone, and the like. The alcohol-based solvent include ethyl alcohol, isopropyl alcohol, and so on, and examples of the aprotic solvent include nitriles such as R-CN (wherein R is a C2 to C20 linear, branched, or cyclic hydrocarbon group that may include a double bond, an aromatic ring, or an ether bond), amides such as dimethylformamide, dioxolanes such as 1,3-dioxolane, sulfolanes, and so on.

The non-aqueous organic solvent may be used alone or in a mixture of two or more. When the organic solvent is used in a mixture, the mixture ratio can be controlled in accordance with a desirable battery performance.

The carbonate-based solvent may include a mixture of a cyclic carbonate and a chain carbonate. The cyclic carbonate and the chain carbonate are mixed together at a volume ratio of about 1 : 1 to about 1 : 9, and when the mixture is used as an electrolyte, the electrolyte performance may be enhanced.

The non-aqueous organic solvent of the present disclosure may further include an aromatic hydrocarbon-based organic solvent in addition to the carbonate-based solvent. In this case, the carbonate-based solvent and the aromatic hydrocarbon-based organic solvent may be mixed in a volume ratio of about 1: 1 to about 30: 1.

As the aromatic hydrocarbon-based organic solvent, an aromatic hydrocarbon-based compound of Chemical Formula 2 may be used.

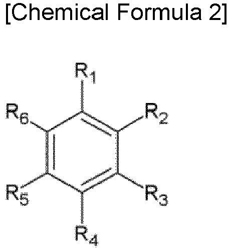

In Chemical Formula 2, R₁ to R₆ are the same or different and are selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The non-aqueous electrolyte may further include vinylene carbonate or an ethylene carbonate-based compound of Chemical Formula 3 in order to improve cycle-life of a battery.

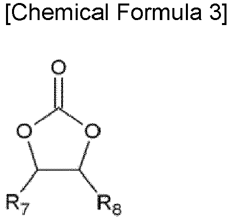

In Chemical Formula 3, R₇ and R₈ may be the same or different and may be selected from hydrogen, a halogen group, a cyano group (CN), a nitro group (NO₂), and a fluorinated C1 to C5 alkyl group, wherein at least one of R₇ and R₈ is selected from a halogen group, a cyano group (CN), a nitro group (NO₂), and a fluorinated C1 to C5 alkyl group, provided that R₇ and R₈ are not both hydrogen.

Examples of the ethylene carbonate-based compound may include difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the cycle-life improvement additive may be used within an appropriate range.

The lithium salt dissolved in an organic solvent supplies a battery with lithium ions, basically operates the rechargeable lithium battery, and improves transportation of the lithium ions between a positive electrode and a negative electrode. Examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) wherein, x and y are natural numbers, LiCI, Lil, and LiB(C₂O₄)₂ (lithium bis(oxalato) borate, LiBOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

The polyethylene is generally HDPE (high density polyethylene, density: 0.94 g/cc to 0.965 g/cc), MDPE (medium density polyethylene, density: 0.925 g/cc to 0.94 g/cc), LDPE (low density polyethylene, density: 0.91 g/cc to 0.925 g/cc), and VLDPE (very low density polyethylene, density: 0.85 g/cc to 0.91 g/cc).

The flake-shaped polyethylene particles may be used alone or in combination of two or more polyethylene polymers such as HDPE, MDPE, or LDPE.

The average particle size (D50) of the flake-shaped polyethylene particles included in the negative electrode functional layer disposed on the negative active material layer may be 1 µm to 8 µm, and specifically 2 µm to 6 µm.

As used herein, when a definition is not otherwise provided, the average particle size (D50) may be measured by a well-known method for a person of an ordinary skill in the art, for example, as a particle size analyzer, or from TEM or SEM photographs. Alternatively, a dynamic light-scattering measurement device is used to perform a data analysis, and the number of particles is counted for each particle size range. From this, the D50 value may be easily obtained through a calculation.

Precisely, the particle size of a flake-shaped polyethylene particle may be determined by a dynamic light-scattering measurement method. Specifically, the size may be measured by LS13 320 series most common laser diffraction measuring instrument. For example, about 5 wt% of the flake-shaped polyethylene is diluted with a main solvent, and then the mixture is dispersed by ultrasonicator for about 1 minute. Then the particle size of a flake-shaped polyethylene particle may be determined by a common measuring method.

More precisely, the particle size of a flake-shaped polyethylene particle may be determined by a dynamic light-scattering measurement method. Specifically, the size may be measured by ISO 13320 through the analysis of the light-scattering properties of the particles. For the non-spherical particles, a size distribution is reported, where the predicted scattering pattern for the volumetric sum of spherical particles matches the measured scattering pattern.On the other hand, a ratio of the long axis length relative to the short axis length of the flake-shaped polyethylene particles is 1.1 to 4.5. For example, a ratio of the long axis length relative to the short axis length of the flake-shaped polyethylene particles may be 1.2 to 3.5. Specifically, the ratio may refer to the aspect ratio of the minimum to the maximum Feret diameter. The Aspect Ratio ψ_{A} (0 < ψ_{A}≤ 1) is defined by the ratio of the Minimum to the Maximum Feret Diameter ψA = x_{Feret min} / x_{Feret max}. It gives an indication for the elongation of the particle.

In addition, a thickness of the flake-shaped polyethylene particles may be 0.2 µm to 4 µm, specifically, 0.3 µm to 2.5 µm, for example may be 0.3 µm to 1.5 µm.

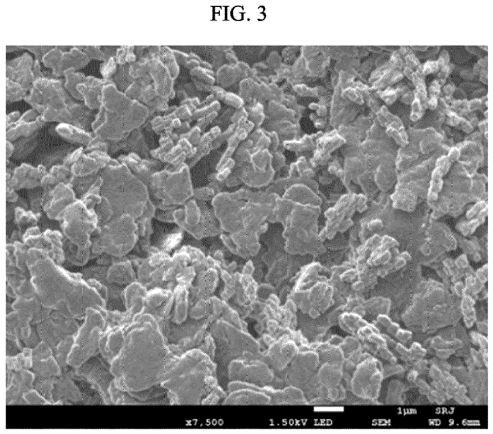

The polyethylene particles according to this disclosure are flake-shaped, as seen in FIG. 3, and the average particle size is defined as (D50) described above.

When the size and thickness of the flake-shaped polyethylene particles are within the above range, ion channels may be effectively closed even in a small amount.

When the negative electrode functional layer including the flake-shaped polyethylene particles is provided, a reaction rate may be increased according to temperature under the same reaction conditions, compared with the case of including spherical polyethylene particles, thereby improving stability improvement effect of the rechargeable lithium battery. In the case of the flake-shaped polyethylene particles before melting, an area covering pores is thinner and wider than that of the spherical shape polyethylene particles before melting. When the polyethylene particles are melted at a predetermined temperature or more to close ion channels, a reaction rate is faster because the flake-shaped polyethylene particles have a larger area than that of the electrode plate closed by the melted spherical polyethylene particles.

That is, the polyethylene particles included in the negative electrode functional layer during thermal runaway of the battery is melted to close the ion channels, thereby limiting the movement of the ions to implement a shut-down function may prevent additional electrochemical reactions.

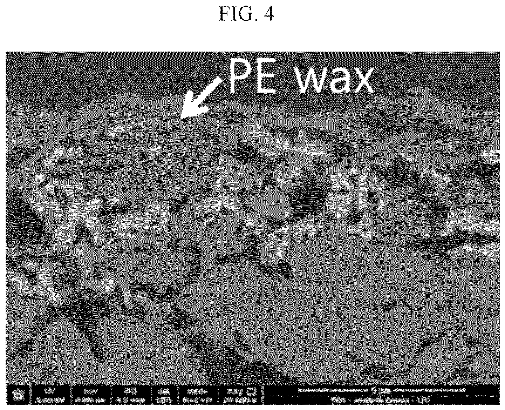

For example, as shown in FIG. 4, since the flake-shaped polyethylene particles according to the embodiment are disposed in a thin and wide shape on the pores in a composition for the negative electrode functional layer, the flake-shaped polyethylene particles melts more rapidly during thermal runaway due to thermal/physical impact, thereby suppressing passage of ions.

The negative electrode functional layer may further include inorganic particles and a binder.

A weight ratio of a sum amount of the flake-shaped polyethylene particles and the inorganic particles to an amount of the binder may be 80:20 to 99: 1, and specifically, the weight ratio may be 85:15 to 97: 3.

The flake-shaped polyethylene particles and the inorganic particles may be included in a weight ratio of 95:5 to 10:90, and specifically in a weight ratio of 30:70 to 70:30.

When the amounts of the flake-shaped polyethylene particles and the inorganic particles are in the above range, cycle-life characteristics and output characteristics of a battery may be secured.

The inorganic particles may include, for example, Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof. Organic particles such as an acrylic compound, an imide compound, an amide compound, or a combination thereof may be further included in addition to the inorganic particles.

The inorganic particles may be spherical, flake-shaped, cubic, or amorphous. The inorganic particles may have an average particle diameter of 1 nm to 2500 nm, for example 100 nm to 2000 nm, 200 nm to 1000 nm, or 300 nm to 800 nm. The average particle diameter of the inorganic particle may be an average particle size (D₅₀) at a volume ratio of 50% in a cumulative size-distribution curve. The particle size may be determined by a dynamic light-scattering measurement method, for example ISO 13320.

The negative electrode functional layer may have a thickness of 1 µm to 10 µm, and specifically 3 µm to 10 µm.

In addition, a ratio of the thickness of the negative active material layer to the thickness of the negative electrode functional layer may be 50: 1 to 10: 1, and specifically 30: 1 to 10: 1.

When the thickness of the negative electrode functional layer is within the above range, the thermal stability may be significantly improved while maintaining excellent cycle-life characteristics.

In particular, when the ratio of the thickness of the negative electrode functional layer is included in the above range, thermal safety may be improved while minimizing the decrease in energy density.

The negative current collector may include one selected from a copper foil, a nickel foil, a stainless steel foil, a titanium foil, a nickel foam, a copper foam, a polymer substrate coated with a conductive metal, and a combination thereof.

The negative active material may include a material that reversibly intercalates/deintercalates lithium ions, a lithium metal, a lithium metal alloy, a material capable of doping/dedoping lithium, or a transition metal oxide.

Examples of the material capable of reversibly intercalating/deintercalating the lithium ions may include a carbonaceous material, that is, a carbon-based negative active material generally used in a rechargeable lithium battery. Examples of the carbon-based negative active material may be crystalline carbon, amorphous carbon, or a combination thereof. The crystalline carbon may be graphite such as non-shaped, sheet-shaped, flake-shaped, spherical shape, or fiber shaped natural graphite or artificial graphite, and the amorphous carbon may be a soft carbon, a hard carbon, a mesophase pitch carbonization product, fired coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a silicon-based or a tin-based material, for example, Si, SiOₓ (0<x<2), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, but not Si), a Si-carbon composite, Sn, SnO₂, a Sn-R alloy (wherein R is an element selected from an alkali metal, an alkaline-earth metal, a Group 13 element, a Group 14 element, a Group 15 element, a Group 16 element, a transition metal, a rare earth element, and a combination thereof, but not Sn), a Sn-carbon composite and the like. At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include a lithium titanium oxide.

In the negative active material layer, an amount of the negative active material 95 wt% to 99 wt% based on a total weight of the negative active material layer.

The negative active material layer may optionally further include a negative electrode conductive material and a negative electrode binder.

Each amount of the negative electrode conductive material and negative electrode binder may be 1 wt% to 5 wt% based on a total weight of the negative active material layer.

The negative electrode conductive material is used to impart conductivity to the negative electrode, and types of the negative electrode conductive material is the same as types of the positive electrode conductive material described above.

The negative electrode binder improves binding properties of negative active material particles with one another and with a current collector. The negative electrode binder may be a non-water-soluble binder, a water-soluble binder, an amphiphilic binder (water-soluble/non-water-soluble binder), or a combination thereof.

The non-water-soluble binder may be polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide, or a combination thereof.

The water-soluble binder may be a styrene-butadiene rubber, an acrylated styrene-butadiene rubber, polyvinyl alcohol, sodium polyacrylate, a copolymer of propylene and a C2 to C8 olefin, a copolymer of (meth)acrylic acid and (meth)acrylic acid alkyl ester, or a combination thereof.

The amphiphilic binder may be an acrylated styrene-based rubber.

When the water-soluble binder is used as a negative electrode binder, a cellulose-based compound may be further used to provide viscosity as a thickener. The cellulose-based compound includes one or more of carboxylmethyl cellulose, hydroxypropylmethyl cellulose, methyl cellulose, or alkali metal salts thereof. The alkali metals may be Na, K, or Li. The thickener may be included in an amount of 0.1 parts by weight to 3 parts by weight based on 100 parts by weight of the negative active material.

The rechargeable lithium battery according to an embodiment of the present invention simultaneously includes the negative electrode functional layer including the flake-shaped polyethylene particles on the negative electrode and a positive active material layer including a positive active material of a layered structure including at least one composite oxide with a metal selected from cobalt, manganese, nickel, and a combination thereof and lithium and a LMFP-based positive active material and thus may minimize the capacity degradation and simultaneously, decrease the heat-increasing rate by thermal/physical impacts, exhibiting an effective shut-down.

The separator 113 is disposed between the positive electrode 111 and the negative electrode 112 as described above. The separator 113 may be, for example, selected from a glass fiber, polyester, polyethylene, polypropylene, polytetrafluoroethylene, or a combination thereof. It may have a form of a non-woven fabric or a woven fabric. For example, in a rechargeable lithium battery, a polyolefin-based polymer separator such as polyethylene and polypropylene is mainly used. In order to ensure the heat resistance or mechanical strength, a coated separator including a ceramic component or a polymer material may be used. Optionally, it may have a mono-layered or multi-layered structure.

Hereinafter, the above aspects of the present disclosure are illustrated in more detail with reference to examples. However, these examples are exemplary, and the present disclosure is not limited thereto.

### (Manufacture of Rechargeable Lithium Battery Cells)

### Example 1:

95 wt% of a positive active material prepared by mixing LiCoO₂ and LiMn_{0.7}Fe_{0.3}PO₄ in a weight ratio of 9:1 as first and second positive active materials, 3 wt% of a polyvinylidene fluoride binder, and 2 wt% of a ketjen black conductive material were mixed in an N-methylpyrrolidone solvent to prepare positive active material slurry. The positive active material slurry was coated on both surfaces of an aluminum current collector and then, dried and compressed to manufacture a positive electrode having a positive active material layer.

98 wt% of graphite, 0.8 wt% of carboxylmethyl cellulose, and 1.2 wt% of a styrene-butadiene rubber were mixed in pure water to prepare negative active material slurry. The negative active material slurry was coated on both surfaces of a copper current collector and then, dried and compressed to manufacture a negative electrode having a negative active material layer.

48 wt% of flake-shaped PE particles (average particle size D50 2µm; a long axis length/a short axis length = 2, a thickness = 0.6 µm), 47 wt% of alumina (an average particle diameter (D50) = 0.7 µm), and 5 wt% of an acrylated styrene-based rubber binder were mixed in an alcohol-based solvent to prepare PE/alumina slurry.

The PE/ alumina slurry was coated on both surfaces of the negative electrode and then, dried and compressed to manufacture a negative electrode having a coating layer including the flake-shaped PE particles.

The positive electrode, a separator of a PE/PP multi-layer, and the negative electrode having the coating layer including the flake-shaped PE particles were sequentially stacked to form an electrode assembly having a structure shown in FIG. 1, and an electrolyte (1.0 M LiPF₆ in EC/DEC = 50:50 v/v) was injected thereinto to manufacture a rechargeable battery cell.

### Example 2:

A rechargeable battery cell was manufactured according to the same method as Example 1 except that NCA (Li_{1.02}Ni_{0.60}Co_{0.20}Al_{0.20}O₂) was used instead of LiCoO₂.

### Example 3:

A rechargeable battery cell was manufactured according to the same method as Example 1 except that NCM (LiNi_{1/3}Co_{1/3}Mn_{1/3}O₂) was used instead of LiCoO₂.

### Example 4

A rechargeable battery cell was manufactured according to the same method as Example 1 except that a positive active material prepared by mixing LiCoO₂ and LiMnPO₄ in a weight ratio of 9:1 as first and second positive active materials was used instead of the mixed positive active material of LiCoO₂/LiMn_{0.7}Fe_{0.3}PO₄ in Example 1.

### Comparative Example 1

A rechargeable battery cell was manufactured according to the same method as Example 1 except that LiCoO₂ alone was used instead of the mixed positive active material of LiCoO₂/LiMn_{0.7}Fe_{0.3}PO₄ in Example 1.

### Comparative Example 2

A rechargeable battery cell was manufactured according to the same method as Example 1 except that a positive active material prepared by mixing LiCoO₂ and LiFePO₄ in a weight ratio of 9:1 was used instead of the mixed positive active material LiCoO₂/ LiMn_{0.7}Fe_{0.3}PO₄ in Example 1.

### (Evaluation Examples)

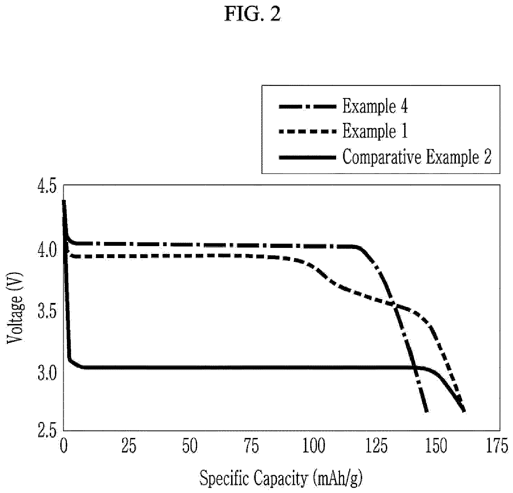

1. Measurement of Discharge Capacity Retention Depending on Discharge Voltage The rechargeable battery cells of Examples 1 and 4 and Comparative Examples 1 and 2 were measured with respect to discharge capacity retention depending on a discharge voltage, and the results are shown in Table 1 and FIG. 2.
2. Evaluation of Penetration Safety

A penetration test was performed with respect to the rechargeable battery cells of Examples 1 to 4 and Comparative Examples 1 and 2 by using a pin having a diameter of 2.5 mm at 5 mm/s under a voltage of 4.3 V, and the results are shown in Table 1.

### <Evaluation Criteria>

- L1:: No influence on appearance
- L2:: Scratches on appearance but no leakage
- L3:: Leakage
- L4:: Fire
- L5:: Explosion

### 3. Evaluation of Dropping Stability

The rechargeable battery cells of Examples 1 to 4 and Comparative Examples 1 and 2 were 18 times dropped from 1.8 m high to a concrete slab floor at 20°C±5°C. The battery cells were placed to have impacts applied to several parts, and then, the test was respectively three times performed with respect to a top end/a bottom end/a top right angle/a bottom right angle/a top left angle/a bottom left angle, and the results are shown in Table 1.

### 4. Evaluation of Collision Safety

The rechargeable battery cells of Examples 1 to 4 and Comparative Examples 1 and 2 were charged up to a maximum voltage at 0.5 C under a cut-off of 0.05 C and then, aged for 24 hours and then, evaluated as follows.
- A full-charged cells was put on a steel sheet (a thickness ≥ 5 cm).
- A round bar (a diameter: 15 mm) is placed respectively in the center of the specimens, wherein the round bar should be placed in a vertical direction to electrodes.

A cylindrical cell was evaluated by placing the round bar in the center of battery cells like a seesaw shape.
- A cylindrical weight of 9 kg was freely dropped from 610 mm high into the bar, and the results are examined and then, shown in Table 1.

**[Table 1]**

| | | Example 1 | Example 2 | Example 3 | Example 4 | Compara tive Example 1 | Compara tive Example 2 |
|---|---|---|---|---|---|---|---|
| Evaluation | Discharge | Discharge capacity retention (%) | | | | | |
| of discharge capacity | voltage (V) | | | | | | |
| | 2.75 | 100 | - | - | 100 | 100 | 100 |
| | 3.00 | 98.6 | - | - | 98.4 | 99.9 | 98.1 |
| | 3.40 | 97.1 | - | - | 97.4 | 98.1 | 94.9 |
| Evaluation of safety | Penetration | L2 | L2 | L2 | L2 | L4 | L2 |
| | Dropping | L2 | L2 | L2 | L2 | L4 | L2 |
| | Collision | L2 | L2 | L2 | L2 | L4 | L2 |

FIG. 2 is a graph showing voltage-capacity characteristic measurement results of the rechargeable lithium battery cells according to Examples 1 and 4 and Comparative Example 2.

Referring to FIG. 2 and Table 1, in the discharge capacity evaluation, the rechargeable battery cell including LFP instead of the compound represented by Chemical Formula 1 as a second positive active material according to Comparative Example 2 exhibited capacity degradation, as a voltage was increased.

On the other hand, the rechargeable battery cell including no second positive active material according to Comparative Example 1 exhibited stability degradation such as an ignition or a leakage in the safety evaluation.

In summary, referring to FIG. 2 and Table 1, a rechargeable battery cell according to the present invention included the first positive active material and the second positive active material represented by Chemical Formula 1 and thus realized capacity at a high voltage and simultaneously, secured safety characteristics, but the battery cell including the first positive active material alone without the second positive active material exhibited safety degradation, and the battery cell including the LFP positive active material as the second positive active material exhibited capacity degradation.

## Claims

1. A rechargeable lithium battery (100), comprising
a positive electrode (114) comprising a positive current collector and a positive active material layer disposed on the positive current collector; and
a negative electrode (112) comprising a negative current collector, a negative active material layer disposed on the negative current collector, and a negative electrode functional layer disposed on the negative active material layer,
wherein the positive active material layer comprises a first positive active material comprising lithium and at least one of a composite oxide of a metal selected from cobalt, manganese, and nickel and a second positive active material comprising a compound represented by Chemical Formula 1:
[Chemical Formula 1] LiₐMₓFe₁₋ₓPO₄
wherein, in Chemical Formula 1, 0.90 ≤ a ≤ 1.8, 0.5 ≤ x ≤ 1.0, and M is at least one of Mn, Co, and Ni,
wherein the negative electrode functional layer comprises flake-shaped polyethylene particles, wherein a ratio of the long axis length relative to the short axis length of the flake-shaped polyethylene particles is 1.1 to 4.5.

2. The rechargeable lithium battery of claim 1, wherein the second positive active material has an average potential of 3.5 V to 4.5 V.

3. The rechargeable lithium battery of claim 1 or 2, wherein the first positive active material and the second positive active material are included in a weight ratio of 97 : 3 to 80 : 20.

4. The rechargeable lithium battery of any one of the preceding claims, wherein the first positive active material is included in an amount of 70 wt% to 99 wt% based on a total weight of the positive active material layer.

5. The rechargeable lithium battery of any one of the preceding claims, wherein the second positive active material is included in an amount of 1 wt% to 15 wt% based on a total weight of the positive active material layer.

6. The rechargeable lithium battery of any one of the preceding claims, wherein the positive active material layer further comprises a positive electrode functional layer disposed on the positive active material layer, wherein
the first positive active material is included in the positive active material layer, and
the second positive active material is included in the positive electrode functional layer.

7. The rechargeable lithium battery of claim 1, wherein the first positive active material comprises at least one of a lithium cobalt oxide (LCO), a lithium nickel cobalt aluminum oxide (NCA), and a lithium nickel cobalt manganese oxide (NCM).

8. The rechargeable lithium battery of any one of the preceding claims, wherein the flake-shaped polyethylene particles have an average particle size (D50) of 1 µm to 8 µm determined by a dynamic light-scattering measurement method.

9. The rechargeable lithium battery of any one of the preceding claims, wherein a thickness of the flake-shaped polyethylene particles is 0.2 µm to 4 µm.

10. The rechargeable lithium battery of any one of the preceding claims, wherein the negative electrode functional layer further comprises inorganic particles and a binder.

11. The rechargeable lithium battery of claim 10, wherein a weight ratio of a sum amount of the flake-shaped polyethylene particles and the inorganic particles to an amount of the binder is 80:20 to 99: 1.

12. The rechargeable lithium battery of claim 10, wherein the flake-shaped polyethylene particles and the inorganic particles are included in a weight ratio of 95:5 to 10:90.

13. The rechargeable lithium battery of any one of the preceding claims, wherein the negative electrode functional layer has a thickness of 1 µm to 10 µm.

## Patentansprüche

1. Eine wiederaufladbare Lithiumbatterie (100), aufweisend:
eine positive Elektrode (114), die einen positiven Stromkollektor und eine positive aktive Materialschicht, die auf dem positiven Stromkollektor angeordnet ist, aufweist; und
eine negative Elektrode (112), die einen negativen Stromkollektor, eine negative aktive Materialschicht, die auf dem negativen Stromkollektor angeordnet ist, und eine negative Elektrodenfunktionsschicht, die auf der negativen aktiven Materialschicht angeordnet ist, aufweist,
wobei die positive aktive Materialschicht ein erstes positives aktives Material, das Lithium und zumindest eines von einem Verbundoxid eines Metalls ausgewählt aus Cobalt, Mangan und Nickel aufweist, und ein zweites positives aktives Material, das eine Verbindung, die durch die chemische Formel 1 dargestellt ist, aufweist, aufweist:
[Chemische Formel 1] LiₐMₓFe₁₋ₓPO₄
wobei in der chemischen Formel 1 0,90 ≤ a ≤ 1,8, 0,5 ≤ x ≤ 1,0 und M zumindest eines von Mn, Co und Ni ist,
wobei die negative Elektrodenfunktionsschicht flockenförmige Polyethylenpartikel aufweist, wobei ein Verhältnis der Länge der langen Achse bezüglich der Länge der kurzen Achse der flockenförmigen Polyethylenpartikel 1,1 bis 4,5 beträgt.

2. Die wiederaufladbare Lithiumbatterie nach Anspruch 1, wobei das zweite positive aktive Material ein mittleres Potential von 3,5 V bis 4,5 V aufweist.

3. Die wiederaufladbare Lithiumbatterie nach Anspruch 1 oder 2, wobei das erste positive aktive Material und das zweite positive aktive Material in einem Gewichtsverhältnis von 97 : 3 bis 80 : 20 enthalten sind.

4. Die wiederaufladbare Lithiumbatterie nach einem der vorhergehenden Ansprüche, wobei das erste positive aktive Material in einer Menge von 70 Gew.-% bis 99 Gew.-%, bezogen auf ein Gesamtgewicht der positiven aktiven Materialschicht, enthalten ist.

5. Die wiederaufladbare Lithiumbatterie nach einem der vorhergehenden Ansprüche, wobei das zweite positive aktive Material in einer Menge von 1 Gew.-% bis 15 Gew.-%, bezogen auf ein Gesamtgewicht der positiven aktiven Materialschicht, enthalten ist.

6. Die wiederaufladbare Lithiumbatterie nach einem der vorhergehenden Ansprüche, wobei die positive aktive Materialschicht ferner eine positive Elektrodenfunktionsschicht, die auf der positiven aktiven Materialschicht angeordnet ist, aufweist, wobei
das erste positive aktive Material in der positiven aktiven Materialschicht enthalten ist, und
das zweite positive aktive Material in der positiven Elektrodenfunktionsschicht enthalten ist.

7. Die wiederaufladbare Lithiumbatterie nach Anspruch 1, wobei das erste positive aktive Material zumindest eines von einem Lithium-Cobalt-Oxid (LCO), einem Lithium-Nickel-Cobalt-Aluminium-Oxid (NCA) und einem Lithium-Nickel-Cobalt-Mangan-Oxid (NCM) aufweist.

8. Die wiederaufladbare Lithiumbatterie nach einem der vorhergehenden Ansprüche, wobei die flockenförmigen Polyethylenpartikel eine mittlere Partikelgröße (D50) von 1 µm bis 8 µm, die durch ein Verfahren zur dynamischen Lichtstreuungsmessung bestimmt wird, aufweisen.

9. Die wiederaufladbare Lithiumbatterie nach einem der vorhergehenden Ansprüche, wobei eine Dicke der flockenförmigen Polyethylenpartikel 0,2 µm bis 4 µm beträgt.

10. Die wiederaufladbare Lithiumbatterie nach einem der vorhergehenden Ansprüche, wobei die negative Elektrodenfunktionsschicht ferner anorganische Partikel und ein Bindemittel aufweist.

11. Die wiederaufladbare Lithiumbatterie nach Anspruch 10, wobei ein Gewichtsverhältnis einer Summenmenge der flockenförmigen Polyethylenpartikel und der anorganischen Partikel zu einer Menge des Bindemittels 80 : 20 bis 99 : 1 beträgt.

12. Die wiederaufladbare Lithiumbatterie nach Anspruch 10, wobei die flockenförmigen Polyethylenpartikel und die anorganischen Partikel in einem Gewichtsverhältnis von 95 : 5 bis 10 : 90 enthalten sind.

13. Die wiederaufladbare Lithiumbatterie nach einem der vorhergehenden Ansprüche, wobei die negative Elektrodenfunktionsschicht eine Dicke von 1 µm bis 10 µm aufweist.

## Revendications

1. Batterie rechargeable au lithium (100) comprenant une électrode positive (114) comprenant un collecteur de courant positif et une couche de matériau actif positif disposée sur le collecteur de courant positif ; et
une électrode négative (112) comprenant un collecteur de courant négatif, une couche de matériau actif négatif disposée sur le collecteur de courant négatif, et une couche fonctionnelle d'électrode négative disposée sur la couche de matériau actif négatif,
dans laquelle la couche de matériau actif positif comprend un premier matériau actif positif comprenant du lithium et au moins un oxyde composite d'un métal choisi parmi le cobalt, le manganèse et le nickel, et un deuxième matériau actif positif comprenant un composé représenté par la formule chimique 1 :
[formule chimique 1] LiₐMₓFe₁₋ₓPO₄
dans laquelle, dans la formule chimique 1, 0,90 ≤ a ≤ 1,8, 0,5 ≤ x ≤ 1,0, et M est au moins l'un parmi Mn, Co et Ni,
dans laquelle la couche fonctionnelle d'électrode négative comprend des particules de polyéthylène en forme de paillettes, dans laquelle le rapport de la longueur de l'axe long à la longueur de l'axe court des particules de polyéthylène en forme de paillettes est de 1,1 à 4,5.

2. Batterie rechargeable au lithium selon la revendication 1, dans laquelle le deuxième matériau actif positif a un potentiel moyen de 3,5 V à 4,5 V.

3. Batterie rechargeable au lithium selon la revendication 1 ou 2, dans laquelle le premier matériau actif positif et le deuxième matériau actif positif sont inclus en un rapport en poids de 97:3 à 80:20.

4. Batterie rechargeable au lithium selon l'une quelconque des revendications précédentes, dans laquelle le premier matériau actif positif est inclus en une quantité de 70 % en poids à 99 % en poids par rapport au poids total de la couche de matériau actif positif.

5. Batterie rechargeable au lithium selon l'une quelconque des revendications précédentes, dans laquelle le deuxième matériau actif positif est inclus en une quantité de 1 % en poids à 15 % en poids par rapport au poids total de la couche de matériau actif positif.

6. Batterie rechargeable au lithium selon l'une quelconque des revendications précédentes, dans laquelle la couche de matériau actif positif comprend en outre une couche fonctionnelle d'électrode positive disposée sur la couche de matériau actif positif, dans laquelle
le premier matériau actif positif est inclus dans la couche de matériau actif positif, et
le deuxième matériau actif positif est inclus dans la couche fonctionnelle d'électrode positive.

7. Batterie rechargeable au lithium selon la revendication 1, dans laquelle le premier matériau actif positif comprend au moins l'un parmi un oxyde de lithium et de cobalt (LCO), un oxyde de lithium, nickel, cobalt et aluminium (NCA), et un oxyde de lithium, nickel, cobalt et manganèse (NCM).

8. Batterie rechargeable au lithium selon l'une quelconque des revendications précédentes, dans laquelle les particules de polyéthylène en forme de paillettes ont une granulométrie moyenne (D50) de 1 µm à 8 µm, déterminée par un procédé de mesure par diffusion dynamique de la lumière.

9. Batterie rechargeable au lithium selon l'une quelconque des revendications précédentes, dans laquelle l'épaisseur des particules de polyéthylène en forme de paillettes est de 0,2 µm à 4 µm.

10. Batterie rechargeable au lithium selon l'une quelconque des revendications précédentes, dans laquelle la couche fonctionnelle d'électrode négative comprend en outre des particules inorganiques et un liant.

11. Batterie rechargeable au lithium selon la revendication 10, dans laquelle le rapport en poids d'une quantité ajoutée des particules de polyéthylène en forme de paillettes et des particules inorganiques à une quantité du liant est de 80:20 à 99:1.

12. Batterie rechargeable au lithium selon la revendication 10, dans laquelle les particules de polyéthylène en forme de paillettes et les particules inorganiques sont incluses en un rapport en poids de 95:5 à 10:90.

13. Batterie rechargeable au lithium selon l'une quelconque des revendications précédentes, dans laquelle la couche fonctionnelle d'électrode négative a une épaisseur de 1 µm à 10 µm.
